# EUROPÄISCHE PATENTSCHRIFT

(11) **EP 2 667 991 B1**
(45) Veröffentlichungstag und Bekanntmachung des Hinweises auf die Patenterteilung: **30.03.2016**
(21) Anmeldenummer: 12700206.1
(22) Anmeldetag: 05.01.2012
(51) Int. Cl.: B23B 3/26, B23B 5/16

(54) **MASCHINE ZUR BEARBEITUNG VON ROHRENDEN**
MACHINE FOR MACHINING PIPE ENDS
MACHINE D'USINAGE D'EXTRÉMITÉS DE TUBES

(30) Priorität: 29.01.2011 DE 102011009794
(43) Veröffentlichungstag der Anmeldung: 04.12.2013
(73) Patentinhaber: SMS group GmbH, 40237 Düsseldorf (DE)
(72) Erfinder: ZABEL, Andreas, 40670 Meerbusch (DE); SCHULZE, Alexander, 44388 Dortmund (DE); DERIX, Rainer, 52525 Heinsberg (DE); REHAG, Ralf, 21400 Reinstorf (DE)
(74) Vertreter: Grosse, Wolf-Dietrich Rüdiger
(86) Internationale Anmeldenummer: PCT/EP2012/000031
(87) Internationale Veröffentlichungsnummer: WO 2012/100903

(56) Entgegenhaltungen:
- EP-A1- 1 190 793
- EP-A2- 1 559 494
- US-A- 3 645 638
- US-A- 4 626 149

## Beschreibung

Die Erfindung betrifft eine Rohrendenbearbeitungsmaschine gemäß dem Oberbegriff des Anspruchs 1, der zur Steuerung mindestens eine Rechnereinheit zugeordnet ist und bei der die Werkzeuge radial zum Rohr anstellbar in einem über eine durch einen Spindelkasten hindurchgeführte Hauptspindel von einem Antriebsmotor angetriebenen Werkzeugkopf verschiebbar angeordnet sind, der koaxial um das fest eingespannte Rohrende rotiert, wobei die Werkzeuge in als Schieber ausgebildeten Werkzeughaltern angeordnet sind und benachbarte Schieber gemeinsam mit einem mit einem Gewichtsausgleich ausgebildeten Zahnrad kämmen.

Eine Rohrendenbearbeitungsmaschine ist zum Beispiel aus der EP 1 559 494 A2 bekannt.

Eine Werkzeugmaschine mit einem solchen Werkzeugkopf zur Bearbeitung von Rohrenden, insbesondere zum Schneiden von Gewindeanschlüssen, ist durch die DE 44 38 818 A1 bekannt geworden. Das Rohrgewinde wird in der Regel bei einmaligem Überfahren der Werkzeuge über das Rohrende hergestellt, wobei die Bewegungen der Werkzeuge numerisch gesteuert werden. Eine besondere Bedeutung kommt bei diesen Maschinen dem eigentlichen Werkzeugkopf zu, in dem die das Gewinde oder auch eine Andrehung (Planen sowie Außen- und Innenfasen) des Rohres erzeugenden Werkzeuge radial gegen das fest eingespannte Rohr anstellbar geführt sind. Das Rohr selbst wird in eine definierte Lage zur Maschine gebracht und der Werkzeugvorschub eingeschaltet, sobald das Rohrende seine exakte Lage erreicht hat.

Die Bearbeitungswerkzeuge sind am Werkzeugkopf gleichmäßig am Umfang verteilt verschiebbar angeordnet, wobei die Zahl der verwendeten Werkzeuge zwar beliebig ist, doch in den meisten Fällen sechs Werkzeuge vorgesehen sind, von denen jeweils drei um 120° versetzte Werkzeuge gleichläufig und die anderen drei um 120° versetzten Werkzeuge synchronisiert gegenläufig dazu bewegt werden. Das geschieht durch zentrale Zahnräder, mit denen die Zahnstangen der die Werkzeuge tragenden Schieber kämmen. Bei den hohen Drehzahlen des Werkzeugkopfes von beispielsweise 1.000 U/min entstehen sehr hohe Fliehkräfte an den beweglichen Massen, die den möglichst klein zu haltenden Vorschubkräften der exakt zu positionierenden Werkzeuge entgegenwirken. Die mit den Schiebern kämmenden Zahnräder, ausgeführt als Stirnzahnräder, dienen daher auch gleichzeitig zum Fliehkraftausgleich. Ein kompletter Fliehkraftausgleich liegt allerdings nur dann vor, wenn die Schieber ihre Mittelstellung einnehmen, d.h. in lediglich einer Zwischen-Anstellposition.

Um eine Kompensation zu haben, wenn die Schieber aufgrund der radialen Zustellung nicht mehr denselben radialen Abstand von der Rotationsachse einnehmen, so dass die auf sie wirkenden Fliehkräfte nicht mehr gleich groß sind und sich nicht mehr ausgleichen, ist es aus der DE 101 33 856 A1 bekannt, eine zusätzliche Ausgleichseinrichtung vorzusehen. Diese besteht aus einem keulenförmigen Ausgleichsgewicht mit einer Verzahnung, die mit einem Zahnrad kämmt, dass mit einer Zahnstange eines ersten Schiebers in Eingriff ist. Mit dem keulenartigen Ausgleichsgewicht kann allerdings das Gegenmoment nur durch eine relativ geringe Auslenkung erfolgen. Größere Differenzfliehkräfte an dem nicht mit dem Ausgleichsgewicht kämmenden, anderen Schieber können nur mit einem Gegenmoment über den ersten Schieber und das zentrale, zwischen den beiden Schiebern angeordnete Zahnrad zum Ausgleich kommen. Eine Alternative sieht vor, dass das Ausgleichsgewicht mit dem Zahnrad gekoppelt oder in dieses integriert ist.

Die auf einen solchen Stand der Technik beruhenden, bisher betriebenen Systeme des NC-Gewindeschneidkopfes bzw. Werkzeugkopfes basieren auf folgendem Funktionsprinzip.

Drei voneinander unabhängige Schieberpaare sind in einem Grundkörper des Werkzeugkopfes eingebettet.

Jeweils ein Schieber (A-Schieber) ist mit einer Spindel und Kegelritzel ausgestattet.

Der zweite Schieber (B-Schieber) ist über ein Zahnsegment (Koppelrad) und Zahnstangen, die seitlich an den Schiebern angeordnet sind, mit dem A-Schieber gekoppelt.

Den Kegelritzeln ist ein gemeinsames Tellerrad zugeordnet, das Bestandteil der Hauptspindel ist und über eine Getriebestufe mit Hauptspindelantrieb und Differentialgetriebe mit der Hauptspindel verbunden ist.

Die in das Differentialgetriebe über einen Servomotor eingeleitete Bewegung bewirkt eine radiale Bewegung auf die A-Schieber im Werkzeugkopf.

Durch die Kupplung des A-Schiebers mit dem B-Schieber über das Zentral- bzw. Koppelrad wird erreicht, dass die auf die Schieber wirkenden Zentrifugal- bzw. Fliehkräfte teilweise kompensiert werden.

Diese Kompensation wird durch ein innerhalb des Koppelrades liegendes und über ein Getriebe bewegtes, zusätzliches Kompensationsgewicht bis zu einem nahezu vollständigen Fliehkraftausgleich weiter verstärkt.

Der vorbeschriebene Aufbau der bekannten Rohrendenbearbeitungsmaschinen bringt Nachteile hinsichtlich der Genauigkeit und der Toleranzen mit sich. Denn aufgrund des unvermeidlichen Zahnflankenspiels zwischen dem Koppelrad und der Zahnstange lässt sich für den B-Schieber eine Genauigkeit von allenfalls plus / minus 0,09 mm erreichen, was an diesem Beispiel ein Umkehrspiel von 0,18 mm bedeutet, wenn die Schieber von innen nach außen oder umgekehrt verfahren werden. Die eine etwas höhere Genauigkeit aufweisenden A-Schieber werden daher für das Gewindeschneiden genutzt, während für das weniger anspruchsvolle Planen, Außenfasen und Innenfasen die B-Schieber zum Einsatz gebracht werden.

Für die Herstellung von hoch anspruchsvollen Premiumverbindungen, worunter Sonderverbindungen zu verstehen sind, bei denen konische Gewinde, Dichtsitz und Stoß zur Abdichtung der Verbindung beitragen, sind diese Genauigkeiten unzureichend. Denn diese Verbindungen verlangen im Gewinde- und Dichtsitzdurchmesser eine Genauigkeit von kleiner 0,01 mm sowie eine Oberflächenrauigkeit am Dichtsitz und im Stoß von Ra kleiner / gleich 1,6 µm.

Der Erfindung liegt daher die Aufgabe zugrunde, eine Rohrendenbearbeitungsmaschine der eingangs genannten Art zu schaffen, die bei hoher Flexibilität und groβer Prozessgeschwindigkeit zugleich eine deutliche Erhöhung der Genauigkeit ermöglicht, so dass sich insbesondere mit derselben Maschine auch Premium- bzw. Sonderverbindungen herstellen lassen.

Diese Aufgabe wird erfindungsgemäß dadurch gelöst, dass der Werkzeugkopf mit integrierten, den Schiebern zugeordneten Vorschubmotoren ausgebildet ist und jedem Schieber eine Messeinrichtung zugeordnet ist. Die Vorschubmotoren, vorzugsweise Torquemotoren, die im Grundkörper des Werkzeugkopfes angeordnet sind, erlauben eine schnelle und genaue Kompensation von Verschiebungen unter Last. Es lässt sich ein dezentraler elektromechanischer Antrieb mit permanenter Überwachung der Positionsgleichheit aller Schieber und damit der direkt auf die Schieber geflanschten Bearbeitungswerkzeuge im Zusammenspiel mit den Messsystemen erreichen. Es lassen sich z.B. induktive oder inkrementelle Messeinrichtungen/-systeme mit der Auswerteelektronik verknüpfen, z.B. einem im Werkzeugkopf eingebauten Messsystem ein am linear beweglichen Werkzeugschlitten seitlich vorgesehenes Maßband mit einem im Grundkörper des Werkzeugkopfes angeordnetem Abtastkopf zuordnen.

Eine bevorzugte Ausführung der Erfindung sieht vor, dass jedem Schieber zur radialen Werkzeugverstellung ein geregelter Vorschubmotor zugeordnet ist, womit sich sechs geregelte X-Achsen d.h. zur Radialanstellung der Werkzeuge bzw. Schieber, verwirklichen lassen. Abgesehen davon, dass der gesamte mechanische Antriebsstrang wegfällt und jeder der gleichartigen Schieber universell flexibel anstellbar ist, ermöglicht die elektrische Verspannmöglichkeit eine außerordentlich große Spielfreiheit, was die Voraussetzung schafft, auch Premium- bzw. Sonderverbindungen mit großer Präzision herstellen zu können. Das zudem auch mit Umkehrbewegung in der X-Achse zur Erzeugung balliger, konischer oder dergleichen konturierter Dichtsätze. Denn ein zu großes Umkehrspiel wird wegen des direkten Antriebs der Schieber bzw. Werkzeuge ausgeschlossen, weitestgehend eliminiert.

Wenn nach einem vorteilhaften Vorschlag der Erfindung die Vorschubmotoren zur radialen Verstellung in den Schiebern angeordnete Spindeln beaufschlagen, lässt sich die Spielfreiheit aufgrund des sehr kurzen Antriebsstrangs direkt auf die Spindel, ausgebildet als Rollengewindegetriebe, weiter begünstigen.

Optional ist es möglich, dass jeweils einem Schieberpaar zur radialen Werkzeugverstellung ein geregelter Vorschubmotor zugeordnet ist. Anders als bei den für jeden Schieber einzelnen Motoren müssen die Schieberpaar-Motoren wegen des benötigten größeren Drehmoments entsprechend größer dimensioniert werden. Allerdings ist ein mit Messeinrichtungen für die Schieber, wobei die Messeinrichtungen integrierter Bestandteil der Schieber sein können, ausgebildeter Werkzeugkopf sowohl in der einen als auch in der anderen Variante der Motorenanordnung als Nachrüstteil für bestehende Rohrendenbearbeitungsmaschinen geeignet.

Erfindungsgemäß sind in sich auf der Rückseite des Spindelkastens anschließenden Gehäusen die Komponenten zur Energie- und Datenübertragung sowie der Steuer- und Antriebseinheiten angeordnet und über in der Hauptspindel verlaufenden Kabelführungen mit den Vorschubmotoren und den Messeinrichtungen des Werkzeugkopfes verbunden, wobei in vorteilhafter Ausgestaltung die Gehäuse der Leistungs- und Datenübertragung und der Antriebs- und Steuereinheit auf der Hauptspindel angeordnet sind. Der NC-Werkzeugkopf mit den drei voneinander unabhängigen, in seinem Grundkörper eingebetteten Schieberpaaren ist über eine mechanische Schnittstelle (Kegelaufnahme) mit der Hauptspindel des Spindelkastens verbunden. Sowohl die Antriebsenergie für die im Werkzeugkopf integrierten Vorschubmotoren und zugehörigen Regler als auch die regelungstechnischen Informationen an das Messsystem, die zur Positionierung der Schieber im Werkzeugkopf erforderlich sind, wie auch für den Austausch von Betriebs- und Zustandsdaten, werden über eine Schnittstelle zwischen feststehendem und rotierendem Teil (hohl ausgebildeter Hauptspindel) übertragen. Die vorzugsweise eingesetzten berührungslosen Übertragungstechniken für die Energie- und auch für die Datenübertragung (unidirektionale Energieübertragung und bidirektionaler Datenaustausch) sind für die aufgrund der großen Durchmesser (Haupt- bzw. Hohlspindel) bedingten hohen Umfangsgeschwindigkeiten besonders geeignet.

Zur Energieübertragung wird ein eingangsseitiger Gleich- und Wechselrichter als stationäre Einrichtung in der Nähe des Spindelkastens angeordnet, um eine möglichst kurze Verbindung zur Primärseite des induktiven Luftspaltübertragers realisieren zu können. Die Komponenten zur Gleichrichtung und Glättung auf der Sekundärseite lassen sich in eine Gehäuse zusammen mit den Antriebs- und Steuereinheiten unterbringen.

Die bidirektionale Datenübertragung erfolgt vorteilhaft mit kapazitiver Kopplung. Die Auslegung einerseits der Luftspaltkondensatoren und andererseits die Abschirmung des Übertragers gegen das Eindringen von Verschmutzungen entsprechen hierbei den für einen störungsfreien Betrieb in dem industriellen Umfeld vorgegebenen Erfordernissen.

Alle Daten- bzw. Signalkomponenten und Leistungskomponenten sind mit einer Rechnereinheit verbunden, wobei die Steuerungs- und Antriebseinheiten der X-Achsen (Radialverstellung der Schieber bzw. Werkzeuge) zur Synchronisation mit der Hauptspindel und der Z-Achse (Linearanstellung des Werkzeugschlittens mit dem darauf angeordneten Spindelkasten einschließlich Antriebsmotor der Hauptspindel) über eine Steuer- / Antriebseinheit mit der übergeordneten Steuer- / Antriebseinheit verbunden sind. Zur Interpolation der Achsen/Spindel können beide Steuerungen über Bussysteme gekoppelt werden. Die übergeordnete Steuerung enthält dabei als Standardfunktionen das Monitoring der X-Achsen einschließlich der Aufzeichnung von Betriebsdiagrammen.

Eine besondere Ausgestaltung der Erfindung sieht vor, dass der Grundkörper des Werkzeugkopfes in dem Raum zwischen jeweils benachbarten Paaren von Schiebern mit Taschen ausgebildet ist, in denen mit Kabelführungen verbundene Steckereinheiten zur Daten- und Leistungsübertragung angeordnet sind. Die Verbindung zwischen dem Werkzeugkopf und der auf der Rückseite des Spindelkastens angeordneten Antriebs- und Steuerelektronik lässt sich somit über zwei Verbindungsstellen, nämlich bereitgestellt vom vorderen und hinteren Ende der Kabelführungen mit den darin angeordneten Kabeln, erreichen. Das ermöglicht einerseits eine einfache Demontage des Werkzeugkopfes und andererseits einen einfachen Austausch defekter Komponenten. Die erste Verbindungsstelle befindet sich somit in dreifacher, gleichartiger Ausführung in den Taschen im Grundkörper des Werkzeugkopfes. Zum Lösen der Steckeranschlüsse der Kabelführungen brauchen lediglich die Verbindungen in den drei innen liegenden Taschen gelöst zu werden. Die Taschen sind durch Verschlussdeckel geschlossen, so dass diese zum Zugang zu den Taschen entfernt werden müssen. Die internen Öffnungen am Boden zwischen den Taschen und den eingebauten elektrischen Komponenten sind so ausgebildet, dass die Kabelführungen einschließlich Stecker hindurchgeführt werden können. Alle Energie-/Leistungs- bzw. Daten-/Signalleitungen der Motor-, Sensor- und Messsysteme werden damit auf die im Grundkörper des Werkzeugkopfes in den Taschen angeordneten Stecker geführt.

Die zweiten Steckerverbindungen bzw. Verbindungsstellen am hinteren Ende der Kabelführungen können über Stifteinsätze als Gegenstücke an die rückseitig des Spindelkastens in den stationären Gehäusen angeordneten Komponenten zur Energie- und Datenübertragung sowie der Steuer- und Antriebseinheiten angeschlossen werden.

Weitere Einzelheiten und Merkmale der Erfindung ergeben sich aus den Ansprüchen und der nachfolgenden Beschreibung von in den Zeichnungen dargestellten Ausführungen der Erfindung. Es zeigen:
- Fig. 1: als Einzelheit einer Rohrendenbearbeitungsmaschine in einer perspektivischen Gesamtansicht deren Schlitten bzw. Werkzeugschlitten mit den darauf angeordneten Aggregaten;
- Fig. 2: als Einzelheit des Werkzeugschlittens der Fig. 1 in einer perspektivischen Gesamtansicht den Antriebsstrang für den auf der Hauptspindel angeordneten Werkzeugkopf;
- Fig. 3: den Werkzeugkopf der Rohrendenbearbeitungsmaschine in einer perspektivischen Vorderansicht;
- Fig. 4: den Werkzeugkopf der Fig. 3 in einem Längsschnitt entlang der Linie IV-IV von Fig. 3;
- Fig. 5: als Einzelheit der Fig. 3 einen Querschnitt durch ein Schieberpaar des Werkzeugkopfes; und
- Fig. 6: als Einzelheit einen Längsschnitt durch die Hauptspindel einschließlich darauf angeordnetem Grundkörper des Werkzeugkopfes und rückwärtig bzw. hinten ausgebildeten Gehäusen für die Daten- und Energieübertragung sowie für die Leistungselektronik, wobei der Längsschnitt der oberen Bildhälfte in einer anderen Ebene als der der unteren Bildhälfte verläuft.

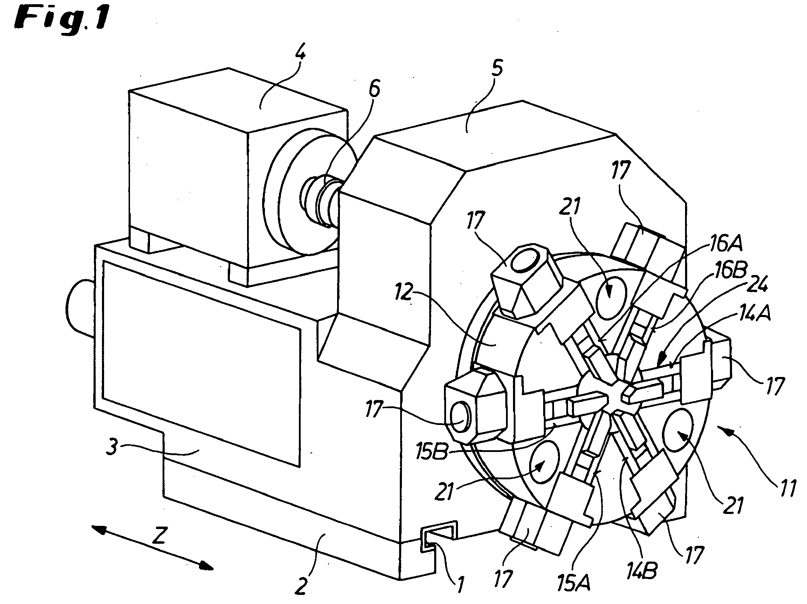

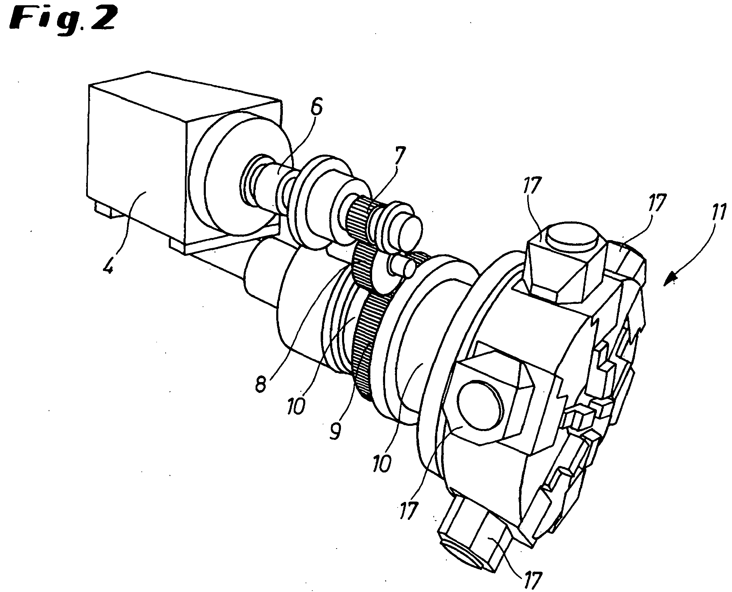

Von einer in ihrem grundsätzlichen Aufbau hinlänglich bekannten Rohrendenbearbeitungsmaschine ist in Fig. 1 ein mit Gleitführungen 1 auf Linearführungen des Maschinenbettes in Längsrichtung bzw. Z-Richtung, wie durch Pfeil angedeutet, hin und her verfahrbarer Werkzeugschlitten 2 dargestellt. Auf einem Schlittengehäuse 3 sind ein Schlitten 4 und ein Spindelkasten 5 angeordnet. Der Motor 4 überträgt seine Antriebsleistung über eine Antriebswelle 6 mit Ritzel 7 und Zwischenzahnrad 8 auf einen Außenzahnkranz 9 einer durch den Spindelkasten 5 hindurchgeführten, hohlen Hauptspindel 10, mit der ein an der Vorderseite des Spindelkastens 6 angeordneter Werkzeugkopf 11 rotiert. Der vorbeschriebene Antriebsstrang einschließlich Werkzeugkopf 11 ist in Fig. 2 ohne Spindelkasten dargestellt.

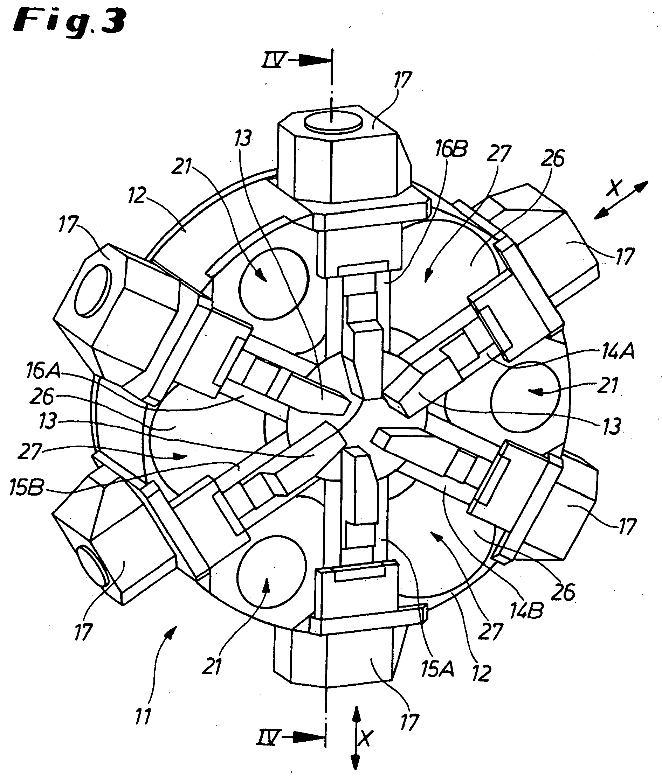

Der in Fig. 3 schematisch dargestellte Werkzeugkopf 11 weist drei in seinem Grundkörper 12 ausgebildete, paarweise zusammenwirkende Schieber mit von diesen getragenen Werkzeugen 13 auf, und zwar die Schieberpaare 14A, 14B sowie 15A, 15B und 16A, 16B. Zur radialen Anstellung der Schieber bzw. Schieberpaare und damit der von diesen getragenen Werkzeuge 13 ist im Ausführungsbeispiel jedem Schieber 14A, 14B, 15A, 15B und 16A, 16B ein als Torquemotor ausgebildeter Vorschubmotor 17 zugeordnet. Optional kann je ein Schieberpaar von einem Vorschubmotor 17 beaufschlagt werden.

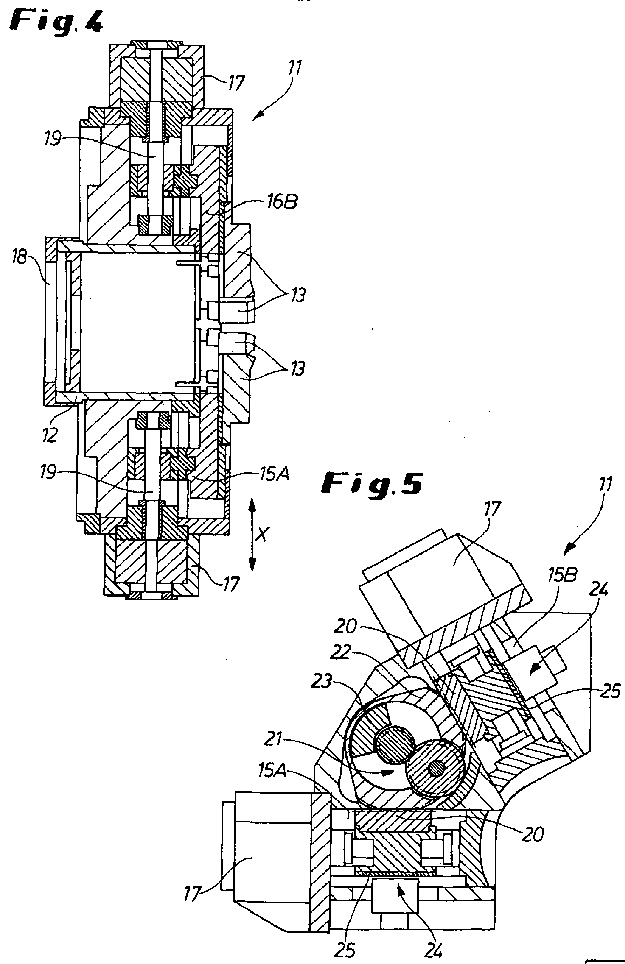

Wie sich dem Längsschnitt der Fig. 4 entnehmen lässt, weist der Werkzeugkopf 11 zur Verbindung mit der Hauptspindel 10 eine als Kegelaufnahme 18 ausgebildete, mechanische Schnittstelle und zum Verstellen der Schieber in der X-Achse für jeden Schieber 14A, 14B, 15A, 15B, 16A, 16B eine von dem jeweiligen Vorschubmotor 17 beaufschlagte Spindel 19 (Rollengewindegetriebe) auf. Wie die Fig. 5 zeigt, sind die Schieber an einer Seite mit einer Zahnstange 20 versehen, wobei die einzelnen Schieber eines jeden Schieberpaares 14A, 14B sowie 15A, 15B und 16A, 16B über eine ein zentrales, mit den benachbarten Zahnstangen 20 kämmendes Segmentrad 22 aufweisende Koppelradverbindung 21 miteinander verbunden sind. Die durch die Drehung des Werkzeugkopfes 11 entstehenden Zentrifugal- bzw. Fliehkräfte werden über die Koppelradverbindung 21 und einen darin integrierten Gewichtsausgleich 23 kompensiert.

Zur Einhaltung der Positionsgleichheit aller Schieberpaare 14A, 14B sowie 15A, 15B und 16A, 16B, d.h. Positionsgleichheit aller groß A - und aller groß BSchieber, werden die Schieber während des Betriebes der Rohrendenbearbeitungsmaschine permanent überwacht. Jeder Schieber besitzt deshalb im Ausführungsbeispiel integriert eine Messeinrichtung 24, umfassend einen Abtastkopf und einen Linearaufnehmer 25, wie in Fig. 5 angedeutet. Optional kann die Schieberposition durch ein Drehgebersystem an den Spindeln 19 der Schieber bestimmt werden.

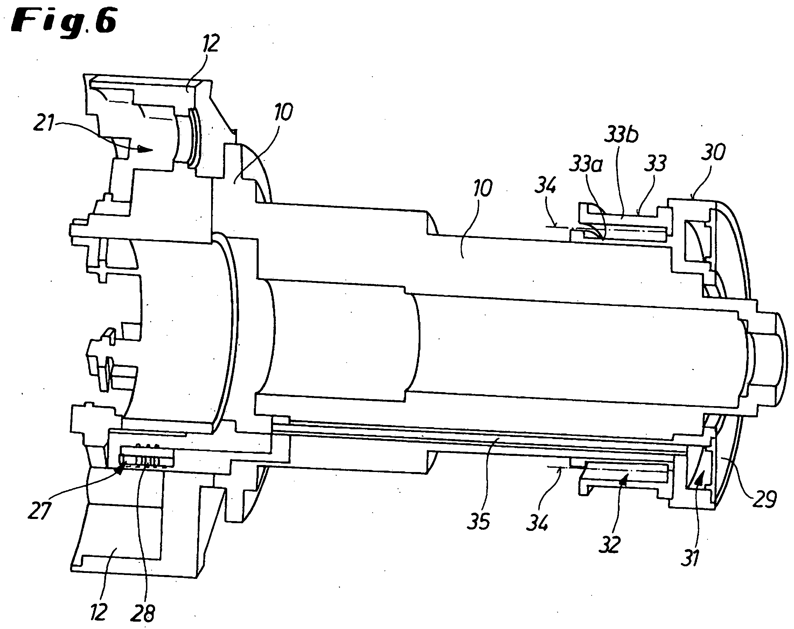

Die Rohrendenbearbeitungsmaschine ist mit einem Werkzeugkopf 11 ausgebildet, der in dem Freiraum bzw. Abstand zwischen den Schieberpaaren 14A, 14B sowie 15A, 15B und 16A, 16B seines Grundkörpers 12 mit durch einen Deckel 26, wie in Fig. 3 schematisch dargestellt, verschlossenen Taschen 27 versehen ist, in denen Steckereinheiten 28 untergebracht sind, auf die alle Energie- bzw. Datenleitungen der Motor-, Sensor- und Messsysteme bzw. -einrichtungen geführt werden (vgl. auch Fig. 6). Die Steckereinheiten 28 werden dann gezielt den einzelnen Komponenten (Vorschubmotor, Rotorlagegeber, direktes Messsystem) zugeordnet.

Die Hauptspindel 10 ist, wie in Fig. 6 angedeutet, zur Leistungs- und Signalübertragung mit stehendem und rotierendem Teil ausgebildet. Auf einem sich der Rückseite des Spindelkastens 6 (vgl. Fig. 1) anschließendem Abschnitt ist die Hauptspindel 10 mit einem durch einen Außendeckel 29 verschlossenen Gehäuse 30 zur Unterbringung der Komponenten der Steuer- und Antriebseinheiten 31 (nicht dargestellt, nur durch einen Pfeil angedeutet) und einem zur Aufnahme der Komponenten zur Energie- und Datenübertragung 32 (wiederum nur durch Pfeil angedeutet) zwei-teiligem Gehäuse 33 versehen. Das Gehäuse 33 besteht aus einem mit der Hauptspindel 10 rotierendem Innengehäuse 33a und einem stationären Außengehäuse 33b, wobei die Trennstelle zwischen rotierend und stationär etwa entlang der Linie 34 verläuft.

In der Hauptspindel 10 verlaufen in Kabelführungen 35 mehrere Kabel zu den Gehäusen 30, 33 der Komponenten der Steuer- und Antriebseinheit 31 bzw. der Komponenten der Energie- und Datenübertragung 32. Die ersichtlicht als Hohlspindel ausgeführte Hauptspindel 10 nimmt in ihrem Hohlraum weitere, nicht dargestellte Komponenten und Kabelverbiridungen zur Leistungs- und Signal- bzw. Datenübertragung auf. Die Rechnereinheiten zur Steuerung der verschiedenen Antriebe der Rohrendenbearbeitungsmaschine mit dem sechs geregelte X-Achsen aufweisenden, Werkzeugkopf sind in den Figuren nicht dargestellt.

### Bezugszeichenliste

- 1: Gleitführung
- 2: Werkzeugschlitten
- 3: Schlittengehäuse
- 4: Motor
- 5: Spindelkasten
- 6: Antriebswelle
- 7: Ritzel
- 8: Zwischenrad
- 9: Außenzahnkranz
- 10: Hauptspindel
- 11: Werkzeugkopf
- 12: Grundkörper
- 13: Werkzeug
- 14A, B: Schieber/Schieberpaar
- 15A, B: Schieber/Schieberpaar
- 16A, B: Schieber/Schieberpaar
- 17: Vorschub-/Torquemotor
- 18: Kegelaufnahme/mechanische Schnittstelle
- 19: Spindel (Rollengewindegetriebe)
- 20: Zahnstange
- 21: Koppelradverbindung
- 22: Segmentrad
- 23: Gewichtsausgleich
- 24: Messeinrichtung
- 25: Linearaufnehmer
- 26: Deckel
- 27: Tasche
- 28: Steckereinheit
- 29: Außendeckel
- 30: Gehäuse
- 31: Steuer- und Antriebseinheit/Leistungselektronik
- 32: Energie- und Datenübertragung
- 33: Gehäuse
- 33a: Innengehäuse
- 33b: Außengehäuse
- 34: Trennstelle/Linie
- 35: Kabelführung

- X-: Achse
- Z-: Achse

## Patentansprüche

1. Rohrendenbearbeitungsmaschine, der zur Steuerung mindestens eine Rechnereinheit zugeordnet ist und bei der die Werkzeuge (13) radial zum Rohr anstellbar in einem über eine durch einen Spindelkasten (6) hindurchgeführte Hauptspindel (10) von einem Motor (4) angetriebenen Werkzeugkopf (11) verschiebbar angeordnet sind, der koaxial um das fest eingespannte Rohrende rotiert, wobei die Werkzeuge in als Schieber (14A, 14B; 15A, 15B; 16A, 16B) ausgebildeten Werkzeughaltern angeordnet sind und benachbarte Schieber gemeinsam mit einem mit einem Gewichtsausgleich (23) ausgebildeten Zahnrad (21) kämmen, wobei der Werkzeugkopf (11) mit integrierten, den Schiebern (14A, 14B; 15A, 15B; 16A, 16B) zugeordneten Vorschubmotoren (17) ausgebildet ist und jedem Schieber eine Messeinrichtung (24) zugeordnet ist,
**dadurch gekennzeichnet,**
**dass** in sich auf der Rückseite des Spindelkastens (6) anschließenden Gehäusen (33; 30) die Komponenten zur Energie- und Datenübertragung (32) sowie der Steuer- und Antriebseinheiten (31) angeordnet und über in der Hauptspindel (10) verlaufenden Kabelführungen (35) mit den Vorschubmotoren (17) und den Messeinrichtungen (24) des Werkzeugkopfes (11) verbunden sind.

2. Rohrendenbearbeitungsmaschine nach Anspruch 1,
**dadurch gekennzeichnet,**
**dass** jedem Schieber (14A, 14B; 15A, 15B; 16A, 16B) zur radialen Werkzeugverstellung ein geregelter Vorschubmotor (17) zugeordnet ist.

3. Rohrendenbearbeitungsmaschine nach Anspruch 1,
**dadurch gekennzeichnet,**
**dass** jeweils einem Schieberpaar (14A, 14B; 15A, 15B; 16A, 16B) zur radialen Werkzeugverstellung ein geregelter Vorschubmotor (17) zugeordnet ist.

4. Rohrendenbearbeitungsmaschine nach einem der Ansprüche 1 bis 3,
**gekennzeichnet durch**
Torquemotoren als Vorschubmotoren (17).

5. Rohrendenbearbeitungsmaschine nach einem der Ansprüche 1 bis 4,
**dadurch gekennzeichnet,**
**dass** die Vorschubmotoren (17) zur radialen Schieberverstellung in den Schiebern (14A, 14B; 15A, 15B; 16A, 16B) angeordnete Spindeln (19) beaufschlagen.

6. Rohrendenbearbeitungsmaschine nach einem der Ansprüche 1 - 5,
**dadurch gekennzeichnet,**
**dass** der Grundkörper (12) des Werkzeugkopfes (11) in dem Raum zwischen jeweils benachbarten Paaren von Schiebern (14A, 14B; 15A, 15B; 16A, 16B) mit Taschen (27) ausgebildet ist, in denen mit den Kabelführungen (35) verbundene Steckereinheiten (28) zur Daten- und Leistungsübertragung angeordnet sind.

7. Rohrendenbearbeitungsmaschine nach einem der Ansprüche 1 - 6,
**dadurch gekennzeichnet,**
**dass** die Gehäuse (33; 30) der Leistungs- und Datenübertragung und der Antriebs- und Steuereinheit auf der Hauptspindel (11) angeordnet sind.

## Claims

1. A machine for machining pipe ends which, for control purposes, is assigned at least one computer unit and in which the tools (13) are arranged displaceably such that they can be positioned radially, in relation to the pipe, in a tool head (11) which is driven by a motor (4) via a main spindle (10) extending through a headstock (6), the tool head rotating coaxially about the fixedly clamped pipe end, wherein the tools are arranged in tool holders formed as slides (14A, 14B; 15A, 15B; 16A, 16B), and adjacent slides together mesh with a toothed wheel (21) which is provided with a counterweight (23), wherein the tool head (11) is provided with integrated feed motors (17) assigned to the slides (14A, 14B; 15A, 15B; 16A, 16B) and each slide is assigned a measuring device (24),
**characterized in that**
the components for energy and data transmission (32) as well as the control and drive units (31) are mounted in housings (33; 30) that are attached on the rear side of the headstock (6), and are connected to the feed motors (17) and the measuring devices (24) of the tool head (11) via cable guides (35) running through the main spindle (10).

2. The machine for machining pipe ends according to claim 1,
**characterized in that**
a controlled feed motor (17) is assigned to each slide (14A, 14B; 15A, 15B; 16A, 16B) for radial tool adjustment.

3. The machine for machining pipe ends according to claim 1,
**characterized in that**
a controlled feed motor (17) is assigned to each pair of slides (14A, 14B; 15A, 15B; 16A, 16B) for radial tool adjustment.

4. The machine for machining pipe ends according to any one of claims 1 to 3,
**characterized by**
torque motors used as feed motors (17).

5. The machine for machining pipe ends according to any one of claims 1 to 4,
**characterized in that**
the feed motors (17) act on spindles (19) arranged in the slides (14A, 14B; 15A, 15B; 16A, 16B) for radial slide adjustment.

6. The machine for machining pipe ends according to any one of claims 1 - 5,
**characterized in that**
the base body (12) of the tool head (11) is provided with pockets (27) in the space between respective adjacent pairs of slides (14A, 14B; 15A, 15B; 16A, 16B), in which pockets plug connectors (28) for data and power transmission connected to the cable guides (35) are arranged.

7. The machine for machining pipe ends according to any one of claims 1 - 6,
**characterized in that**
the housings (33; 30) for power and data transmission and for the drive and control unit are arranged on the main spindle (11).

## Revendications

1. Machine à usiner les extrémités de tubes qui est commandée par au moins une unité de calcul associée et pour laquelle les outils (13) sont agencés de manière réglable radialement par rapport au tube et de manière à pouvoir coulisser dans une tête d'outil (11) entraînée par un moteur (4) au-dessus d'une broche principale (10) traversée par une poupée (6), laquelle tête d'outil tourne coaxialement autour de l'extrémité de tube serrée fixement, les outils étant agencés dans des porte-outils réalisés sous la forme de tiroirs (14A, 14B ; 15A, 15B ; 16A, 16B) et les tiroirs adjacents engrènent de concert une roue dentée (21) réalisée avec un équilibrage de poids (23), pour laquelle la tête d'outil (11) étant réalisée avec des moteurs d'avance (17) associés aux tiroirs (14A, 14B ; 15A, 15B ; 16A, 16B) et un dispositif de mesure (24) étant associé à chaque tiroir,
**caractérisée en ce que**
les composants destinés à la transmission d'énergie et de données (32) ainsi que les unités de commande et d'entraînement (31) sont agencés dans les carters (33 ; 30) se raccordant à la face arrière de la poupée (6) et sont reliés aux moteurs d'avance (17) et aux dispositifs de mesure (24) de la tête d'outil (11) par les chemins de câble (35) passant dans la broche principale (10).

2. Machine à usiner les extrémités de tubes selon la revendication 1,
**caractérisée en ce qu'**
un moteur d'avance (17) réglé est associé à chaque tiroir (14A, 14B ; 15A, 15B ; 16A, 16B) pour le réglage radial de l'outil.

3. Machine à usiner les extrémités de tubes selon la revendication 1,
**caractérisée en ce qu'**
un moteur d'avance (17) réglé est associé respectivement à un tiroir (14A, 14B ; 15A, 15B ; 16A, 16B) pour le réglage radial de l'outil.

4. Machine à usiner les extrémités de tubes selon l'une quelconque des revendications 1 à 3,
**caractérisée par**
des moteurs-couples en tant que moteurs d'avance (17).

5. Machine à usiner les extrémités de tubes selon l'une quelconque des revendications 1 à 4,
**caractérisée en ce que**
les moteurs d'avance (17) précontraignent des broches (19) agencées dans les tiroirs (14A, 14B ; 15A, 15B ; 16A, 16B) pour le réglage de tiroir radial.

6. Machine à usiner les extrémités de tubes selon l'une quelconque des revendications 1 - 5,
**caractérisée en ce que**
le corps de base (12) de la tête d'outil (11) est réalisé avec des poches (27) dans l'espace situé entre chaque paire adjacentes de tiroirs (14A, 14B ; 15A, 15B ; 16A, 16B), dans lesquelles sont agencées des unités connectables reliées (28) aux chemins de câbles (35) pour la transmission des données et de la puissance.

7. Machine à usiner les extrémités de tubes selon l'une quelconque des revendications 1 - 6,
**caractérisée en ce que**
les carters (33 ; 30) de la transmission de la puissance et des données et l'unité d'entraînement et de commande sont agencés sur la broche principale (11) .
